# EUROPEAN PATENT SPECIFICATION

(11) **EP 1 547 903 B1**
(45) Date of publication and mention of the grant of the patent: **08.09.2010**
(21) Application number: 03795358.5
(22) Date of filing: 10.09.2003
(51) Int. Cl.: B62D 1/20, F16C 29/04, F16C 29/12, F16C 25/08, F16D 3/06

(54) **VEHICLE STEERING TELESCOPIC SHAFT**
TELESKOPISCHE FAHRZEUGLENKSÄULE
ARBRE TELESCOPIQUE DE GUIDAGE DE VEHICULE

(30) Priority: 13.09.2002 JP 2002268867
(43) Date of publication of application: 29.06.2005
(73) Proprietor: NSK LTD., Shinagawa-ku, Tokyo 141-8560 (JP)
(72) Inventor: YAMADA, Yasuhisa, Maebashi-shi, Gunma 371-0853 (JP)
(74) Representative: Cross, James Peter Archibald
(86) International application number: PCT/JP2003/011551
(87) International publication number: WO 2004/024535

(56) References cited:
- EP-A- 0 281 723
- EP-A- 1 070 865
- EP-A- 1 512 607
- DE-A1- 3 730 393
- DE-A1- 19 855 538
- DE-A1- 19 917 550
- FR-A- 2 674 646
- JP-A- 11 311 256
- JP-A- 2000 038 142
- JP-A- 2001 050 293
- JP-A- 2001 239 944
- JP-U- 4 123 775

## Description

### TECHNICAL FIELD

The present invention relates to a telescopic shaft for vehicle steering.

### BACKGROUND ART

Conventionally, a steering mechanism of a vehicle employs as its part a telescopic shaft which is constituted by a male shaft and a female shaft brought into spline fitting in order to absorb a displacement in the axial direction created upon running of the vehicle so as not to transmit the displacement or a vibration to a steering wheel. The telescopic shaft is required to reduce a backlash noise in a spline portion, to decrease backlash on the steering wheel, and to reduce a sliding resistance in a sliding movement in the axial direction.

For these reasons, a nylon film is coated on the spline portion of the male shaft of the telescopic shaft and, furthermore, grease is applied on the slide portion, thereby absorbing or mitigating metallic noise, metallic drumming sound, or the like, and at the same time, reducing the sliding resistance and backlash in the direction of rotation. In this case, the formation process of the nylon film includes cleaning of the shaft, application of a primer, heating of the same, coating of nylon powder, rough cutting, finishing cutting and selective fitting with the female shaft, in this order. The final cutting step is performed by selecting a die in accordance with the precision of the female shaft which has been already processed.

Japanese Patent Application Laid-Open No. 2001-50293 discloses a telescopic shaft for vehicle steering in which balls are provided in grooves formed on the outer periphery of an inner shaft and on the inner periphery of an outer shaft through an elastic member interposed between the groove on the inner shat and the balls. The balls are rotated in an axial movement to decrease a sliding load between the male shaft and the female shaft and, the balls are restricted in rotation so as to transmit torque. This Application further discloses an arrangement that a male groove and a female groove each having a combined section with a certain play are provided on the inner shaft and the outer shaft in order to transmit torque even when the balls are broken.

However, in the former case, it is required to also suppress backlash to the minimum while suppressing the sliding load of the telescopic shaft to the minimum, so that it is unavoidable to select dies having slightly different over-pin sizes each by several microns to meet the size of the female shaft in the final cutting work for the processing, which results in sharp increase in the manufacturing cost. In addition, the nylon film is abraded with a lapse of time of use to create more backlash in the direction or rotation.

Under the condition of a high temperature inside the engine room, the nylon film is changed in volume and the sliding resistance is conspicuously increased or the abrasion thereof is rapidly advanced, thereby increasing backlash in the direction of rotation. As a result, there is a demand to provide a structure, in a telescopic shaft to be used as a shaft for vehicle steering, which can suppress generation of abnormal sound and deterioration of the steering operability caused by backlash in the direction of rotation for a long time easily and at a low cost.

Also, the telescopic shaft for vehicle steering which is disclosed in the latter Patent Application Laid-Open No. 2001-50293 performs a collapsing operation and torque transmission by means of rolling of a plurality of balls in a normal use. To this end, it is structurally required to provide an enough number of balls for enduring an input torque. Further, a guide rail or a sleeve which is to be in contact with the balls has to have sufficiently high rigidity for enduring the torque transmission, which is very disadvantageous in terms of the processing performance with a resultant increase of the cost. There are another structural drawbacks that this shaft is difficult be made compact as a telescopic shaft for vehicle steering and also is difficult to have an enough collapse stroke in a vehicle collision. Further, this shaft displays an undesirable feature as a telescopic shaft for vehicle steering that since the arrangement is constituted only by the balls, the sliding load fluctuates.

EP-A-1 512 607 discloses a telescopic shaft for steering of a vehicle comprising male and female shafts fitted to be slideable and rolling members fitted through an elastic body for preload between at least a pair of axially-extending grooves formed in the male and female shafts.

EP-A-1 070 865 discloses a linear low friction bearing comprising two triangular profiles which enclose a cage which in turn contains rolling bearing components.

### DISCLOSURE OF THE INVENTION

The present invention has been contrived taking the circumstance as described above into consideration, and an object thereof is to seek to provide a telescopic shaft for vehicle steering which is capable of obtaining a stable sliding load, and of securely preventing backlash in the direction of rotation to transmit torque in a state of high rigidity.

According to a first aspect of the present invention, there is provided a telescopic shaft for vehicle steering according to claim 1.

According to a second aspect of the present invention, there is provided a vehicle according to claim 8.

### BRIEF DESCRIPTION OF THE DRAWINGS

In order that the present invention may be more readily understood, embodiments thereof will now be described, by way of example only, with reference to the accompanying drawings, of which:
Fig. 1 is a side view of a steering mechanism of a vehicle to which a telescopic shaft for vehicle steering according to an embodiment of the present invention is applied;
Fig. 2 is a cross-sectional view of a first example of a telescopic shaft for vehicle steering given by way of background to the present invention, taken along the center line in the axial direction thereof;
Fig. 3 is a cross-sectional view taken along the line X-X in Fig. 2;
Fig. 4 is a graph for showing a relationship between a stroke and a sliding load of the telescopic shaft for vehicle steering according to the first example;
Fig. 5 is a cross-sectional view of the telescopic shaft for vehicle steering according to a second example, given by way of background to the present invention, taken along the center line in the axial direction thereof,
Fig. 6 is a cross-sectional view taken along the line X-X in Fig. 5;
Fig. 7 is a cross-sectional view of the telescopic shaft for vehicle steering according to a third example, given by way of background to the present invention, taken along the center line in the axial direction thereof,
Fig. 8 is a cross-sectional view taken along the line X-X in Fig. 7;
Fig. 9 is a transversal cross-sectional view of the telescopic shaft for vehicle steering according to a fourth example, given by way of background to the present invention;
Figs. 10A, 10B and 10C are transversal cross-sectional views of a telescopic shaft for vehicle steering according to first, second and third embodiments of the present invention, respectively;
Figs. 11A, 11B and 11C are transversal cross-sectional views of a telescopic shaft for vehicle steering according to fourth, fifth and sixth embodiments of the present invention, respectively; and
Figs. 12A, 12B and 12C are transversal cross-sectional views of a telescopic shaft for vehicle steering according to seventh, eighth and ninth embodiments of the present invention, respectively.

### EMBODIMENTS OF THE INVENTION

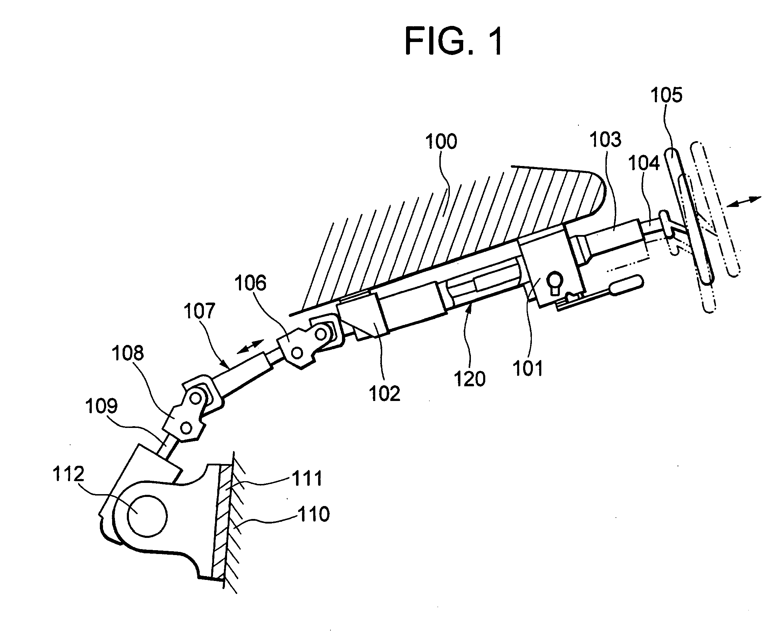

Fig. 1 is a side view of a steering mechanism of a vehicle to which a telescopic shaft for vehicle steering according to an embodiment of the present invention is applied.

Referring to Fig. 1, a steering mechanism is comprised of an upper steering shaft portion 120 (including a steering column 103 and a steering shaft 104 which is rotatably held by the steering column) which is attached to a body-side member 100 through an upper bracket 101 and a lower bracket 102, a steering wheel 105 which is attached to the upper end of the steering shaft 104, a lower steering shaft portion 107 which is coupled to the lower end of the steering shaft 104 through a universal joint 106, a pinion shaft 109 which is coupled to the lower steering shaft portion 107 through a steering shaft joint 108, and a steering rack 112 which is coupled to the pinion shaft 109 and is fixed to another frame 110 of the vehicle body through an elastic member 111.

Here, the upper steering shaft portion 120 and the lower steering shaft portion 107 respectively employ a telescopic shaft for vehicle steering according to an embodiment of the present invention (hereinafter called the telescopic shaft). The lower steering shaft portion 107 is comprised of a male shaft and a female shaft fitted to each other. Such a lower steering shaft portion 107 is required to have the capacity of absorbing a displacement in the axial direction which is generated upon running of the vehicle so as to prevent such a displacement or a vibration from propagating onto the steering wheel 105. Such a capacity is required for a structure in which the vehicle body has a sub-frame structure, in which the member 100 for fixing an upper part of the steering mechanism and the frame 110 to which the steering rack 112 are secured are separately arranged, and the member 100 and the frame 110 are connected and fixed to each other through the elastic member 111 such as rubber. There are another cases in which a length changing function is required for an operator to temporarily reduce the telescopic shaft so as to fit and connect the telescopic shaft to the pinion shaft 109 when connecting the steering shaft joint 108 to the pinion shaft 109. Further, the upper steering shaft portion 120 which is provided in an upper part of the steering mechanism is also constituted by a male shaft and a female shaft fitted to each other. Such an upper steering shaft 120 is required to have the function of expanding and contracting in the axial direction because it is required to have the function of moving the position of the steering wheel 105 in the axial direction to thereby adjust this position in order to obtain an optimal position for the driver to drive the vehicle. In all of the cases described above, the telescopic shaft is required to decrease the rattling sound in the fitting portions, to suppress clatters on the steering wheel 105, and to reduce a sliding resistance in a sliding movement in the axial direction.

### (First Example)

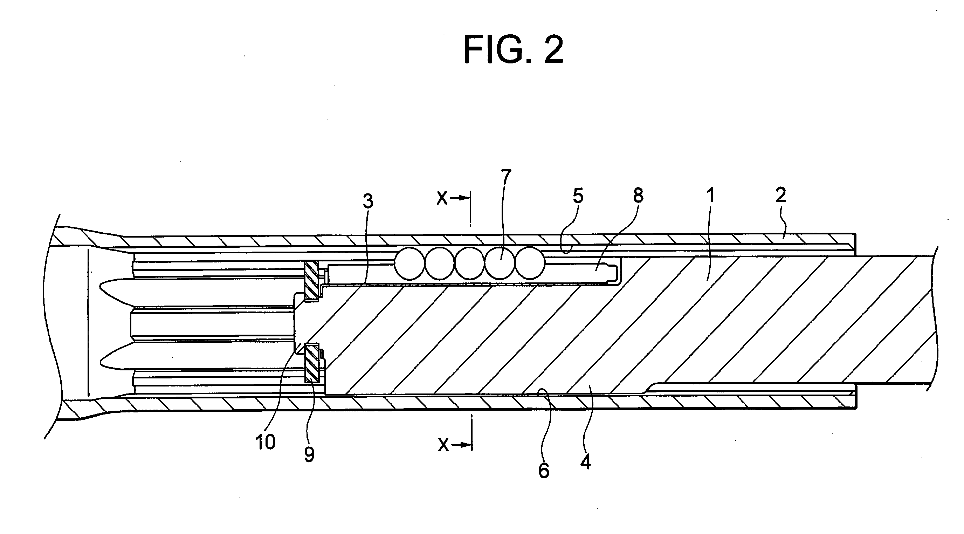

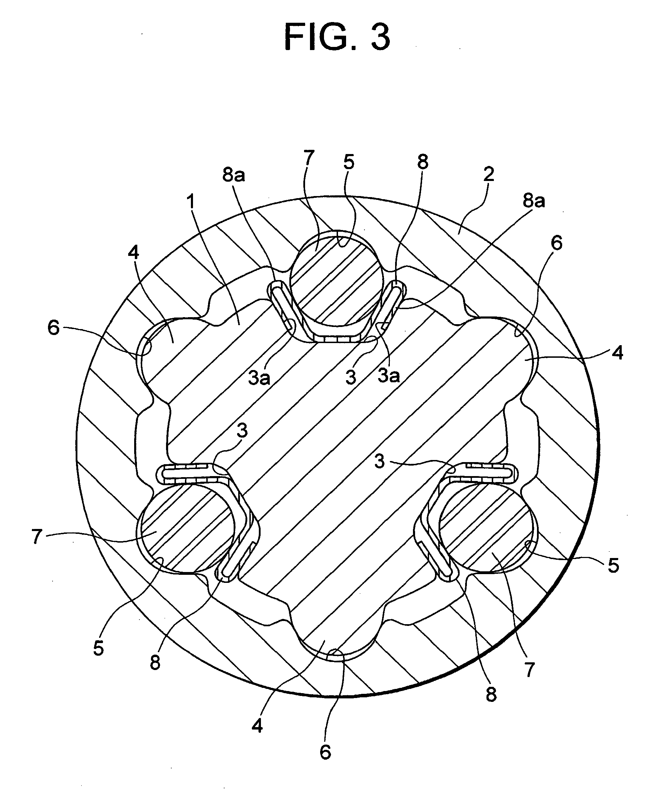

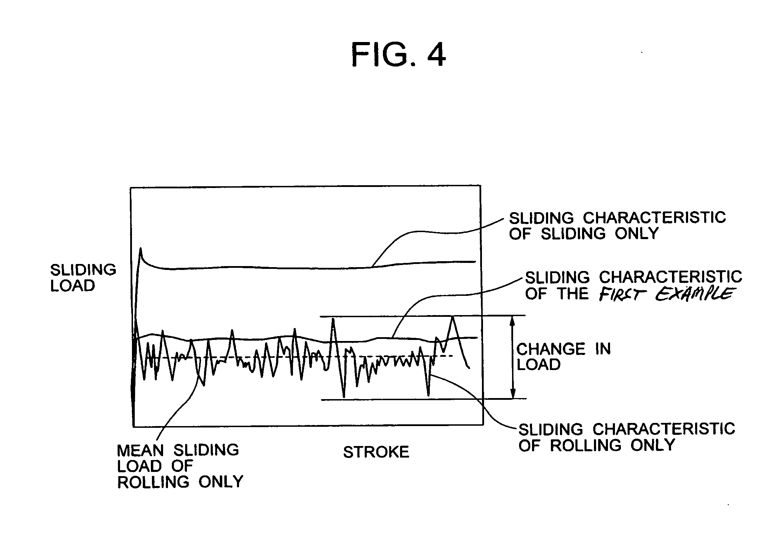

Fig. 2 is a cross-sectional view of a telescopic shaft for vehicle steering according to a first example, given by way of background to the present invention, taken along the center line in the axial direction thereof, Fig. 3 is a cross-sectional view taken along the line X-X in Fig. 2, and Fig. 4 is a graph for showing a relationship between a stroke and a sliding load of the telescopic shaft for vehicle steering according to the first example.

As shown in Figs. 2 and 3, the telescopic shaft for vehicle steering (hereinafter called the telescopic shaft) is comprised of a male shaft 1 and a female shaft 2 which are mutually fitted to be unrotatable and slidable.

In the first example, on the outer peripheral surface of the male shaft 1, there are formed three protrusions 4 extended in the axial direction at intervals of 120° in the circumferential direction, each having a substantially arcuate cross section. To be corresponding thereto, three grooves 6 extended in the axial direction each having a substantially arcuate cross section are also formed on the inner peripheral surface of the female shaft 2 at the positions opposed to three axial protrusions 4 of the male shaft 1. The axial protrusions 4 and the axial grooves 6 are brought into mutual contact to form torque transmitting portions.

On the outer peripheral portion of the male shaft 1, first grooves 3 extended in the axial direction (hereinafter called the axial grooves 3) each having a substantially U shape are formed between adjacent ones of the three axial protrusions 4. On the inner peripheral surface of the female shaft 2, three second grooves 5 extended in the axial direction (hereinafter called the axial grooves 5) each having a substantially arcuate cross section are formed to oppose to the axial grooves 3 of the male shaft 1. Rolling members 7 are interposed between the axial groove 3 of the male shaft 1 and the axial groove 5 of the female shaft 2 through a wave-shaped elastic member 8 for preloading. The rolling members 7 are arranged to rotate when the male shaft 1 and the female shaft 2 are relatively moved in the axial direction, and to be restrained by the elastic member 8 in rotation to generate no backlash.

Flat portions 8a, 8a on the both sides of the elastic members 8 are in pressure contact with wall portions 3a, 3a on the both sides of the axial groove 3, so as to restrain the whole elastic member 8 not to move in the circumferential direction. The elastic member 8 is arranged to apply preload onto the rolling members 7 and, at the same time, to preload the rolling members 7 and the axial protrusions 4 to the extent that they have no backlash with respect to the female shaft 2.

At an end portion into which the male shaft 1 is inserted in the female shaft 2, a stopper plate 9 for latching the elastic member 8 to fix it in the axial direction is caulked to the male shaft 1 by the use of a caulking portion 10. This stopper plate 9 also works to prevent the rolling members 7 from deviating from the axial groove 3. Thus, there is formed the telescopic shaft for vehicle steering according to the first example.

Since the telescopic shaft of the first example has such a structure, the male shaft 1 and the female shaft 2 are always in contact to be slidable in each torque transmitting portion by the presence of a preloading portion. As a result, the male shaft 1 and the female shaft 2 are mutually slid when they are relatively moved in the axial direction and the rolling members 7 can rotate.

Fig. 4 is a graph for showing a relationship between a stroke and a sliding load of the telescopic shaft for vehicle steering according to the first example. In Fig. 4, a relationship between a stroke and a sliding load by the use of a ball rolling only, that in case of a sliding only, and that in case of the present example are compared with each other. From this graph, it is seen that the telescopic shaft for vehicle steering according to the present example has a low sliding load, is capable of suppressing a fluctuation in sliding load, and has smooth sliding characteristics.

Note that a curvature of the axial protrusion 4 is different from that of the axial groove 6, and the axial protrusions 4 and the axial grooves 6 may be respectively formed in such a manner that they are brought into contact continuously in the axial direction when they are to be brought into contact.
Also, the same functions and effects as those in the first example can be obtained even if the axial protrusions 4 formed on the male shaft are formed on the female shaft side and the axial grooves 6 formed on the female shaft are formed on the male shaft side. It is also possible to arrange such that a curvature of the axial groove 5 is different from that of the rolling members 7 so that the both members can be brought into point contact. Also, the rolling members 7 may take a spherical form. Further, the elastic member 8 may be a leaf spring. It is also possible to obtain a lower sliding load by applying grease on a sliding surface and a rolling surface.

The telescopic shaft of the first example thus constituted is superior in the following points, compared with that of the prior art.

If the sliding surface is caused by pure sliding as in the prior art, a preload for preventing backlash can be fixed only to some extent. That is, since the sliding load is obtained by multiplying a coefficient of friction by a preload, if the preload is raised to prevent backlash or to improve the rigidity of the telescopic shaft, the sliding load is increased. Hence forms a vicious circle.

In this respect, in the present example, the preloading portion employs a rolling mechanism of the rolling members 7 for relative movement in the axial direction, so that the preload can be raised without conspicuous increase of the sliding load. With this arrangement, it is possible to achieve prevention of backlash and improvement of the rigidity without increasing the sliding load, which can not be achieved by the prior art.

Then, at the time of torque transmission, the axial protrusions 4 of the torque transmitting portion are brought into contact with the axial grooves 6 to perform a task of torque transmission. On the other hand, in the preloading portion, the elastic member 8 is elastically deformed to restrain the rolling members 7 in the circumferential direction between the male shaft 1 and the female shaft 2, thereby preventing backlash.

For example, when a torque is inputted from the male shaft 1, since the preload of the elastic member 8 is applied in the initial stage, backlash can be prevented.

Further, when the torque is increased, the axial protrusion 4 of the torque transmitting portion is brought into strong contact with a side of the axial groove 6 so that the axial protrusion 4 receives a reaction force more strongly than the rolling members 7, whereby the torque is transmitted mainly by the torque transmitting portion. For this reason, in the first example, it is possible to securely prevent backlash in the direction of rotation of the male shaft 1 and the female shaft 2 and, at the same time, to transmit the torque in a state of high rigidity.

Since the axial protrusions 4, and the axial grooves 6 which are substantially arcuate in cross section, are brought into contact continuously mainly in the axial direction to receive the load thereof, there can be obtained various advantages including that a contact pressure can be suppressed to be lower than the case where the load is supported by point contacts of the rolling members 7. Accordingly, embodiments of the present invention are superior to the prior art employing the ball rolling structure for all of the rows in the following items.
- The damping effect in the sliding portion is greater, compared with the case of the ball rolling structure. As a result, the vibration absorbing performance is higher.
- If the same torque is to be transmitted, the contact pressure can be suppressed to be lower with the axial protrusions 4, so that the length of the torque transmitting portion in the axial direction can be shortened, whereby the space can be used effectively.
- If the same torque is to be transmitted, the contact pressure can be suppressed to be lower with the axial protrusions 4, so that an additional step for hardening the surfaces of the axial grooves of the female shaft by thermal treatment or the like is not required.

- The number of the constituent parts can be reduced.
- The assembling performance can be improved.
- The assembling cost can be reduced.
- Since the task of torque transmission is mainly taken by the torque transmitting portion, the number of the rolling members 7 can be reduced and the collapse stroke can be set to be great.

Embodiments of the present invention are, since partially employing the rolling member 7 structure, superior to the prior art employing the structure that all rows are spline fitted and all rows are slidable, in the following items.
- Since a coefficient of friction is low, the sliding load can be suppressed to be low.
- The preload can be set high so that it is simultaneously possible to prevent backlash for a long time and to obtain high rigidity.

### (Second Example)

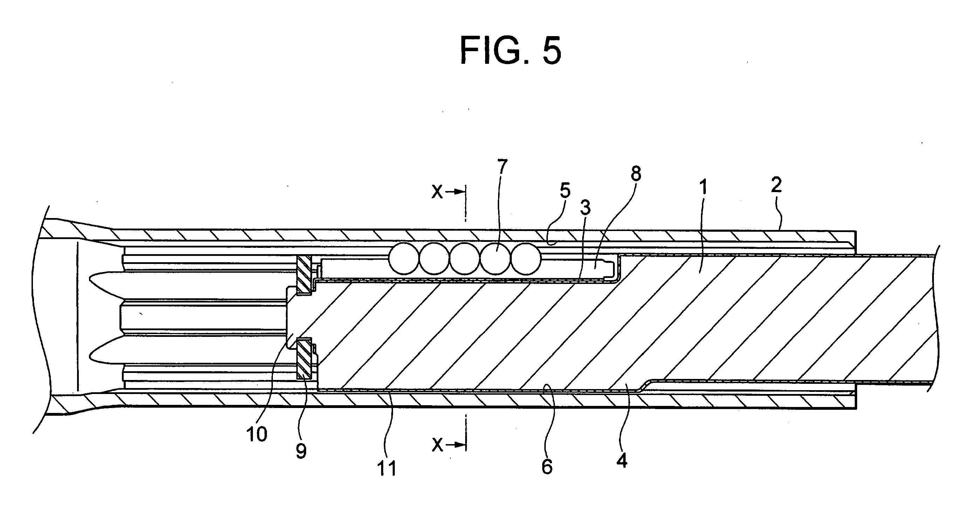

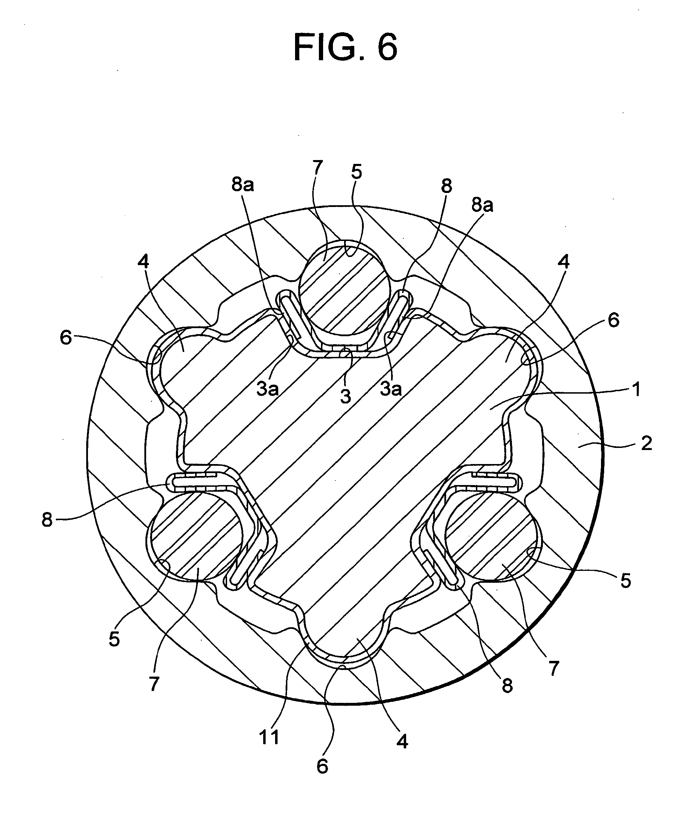

Fig. 5 is a cross-sectional view of the telescopic shaft for vehicle steering according to a second example, given by way of background to the present invention, taken along the center line in the axial direction thereof, and Fig. 6 is a cross-sectional view taken along the line X-X in Fig. 5. The same arrangements as those in the first example are given the same referential numbers and symbols and the description thereof will be omitted.

The second example is different from the first example in that a solid lubricant film 11 is formed on the outer peripheral surface of the male shaft 1. Since a contact resistance between the axial protrusion 4 and the axial groove 6 of the torque transmitting portion can be lowered by thus forming the solid lubricant film 11 on the outer peripheral surface of the male shaft 1, the total sliding load (which is a sliding load generated in a normal use in the structure of the present example in which both rolling and sliding are in action) can be lower, compared with that of the first example.

Then, also in the second example, the same functions and effects as those in the first example can be obtained.

The solid lubricant film 11 is obtained, for example, by a process in which powder of molybdenum dioxide is dispersed and mixed in resin, a spraying or dipping method is applied and then a baking method is applied, or by a process in which PTFE (poly-tetrafluoro-ethylene) is dispersed and mixed in resin and a spraying or dipping method is applied and then a baking method is applied.

Note that, in the second example, the solid lubricant film 11 is formed along the entire outer peripheral surface of the male shaft 1. However, the solid lubricant film 11 may be provided only on the outer peripheral surfaces of the three axial protrusions 4 which are formed on the male shaft 1. This is because the sliding load is mainly caused by the contact between the axial protrusions 4 and the axial grooves 6 so that the sliding resistance in the axial direction can be reduced by reducing the contact resistance of the contact portions therebetween.

It is also possible to obtain a further lower sliding load by applying grease on the sliding surface and the rolling surface. Also, the curvature of the axial protrusion 4 may be different from that of the axial groove 6 so that the axial protrusions 4 and the axial grooves 6 may be formed in such a manner that they are brought into contact with each other continuously in the axial direction. The same functions and effects as those in the this example can be obtained even if the axial protrusions 4 formed on the male shaft are formed on the female shaft side and the axial grooves 6 formed on the female shaft are formed on the male shaft side. It is also possible to arrange such that a curvature of the axial groove 5 is different from that of the rolling members 7 so that the both members can be brought into point contact. Also, the rolling members 7 may take a spherical form. Further, the elastic member 8 may be a leaf spring.

### (Third Example)

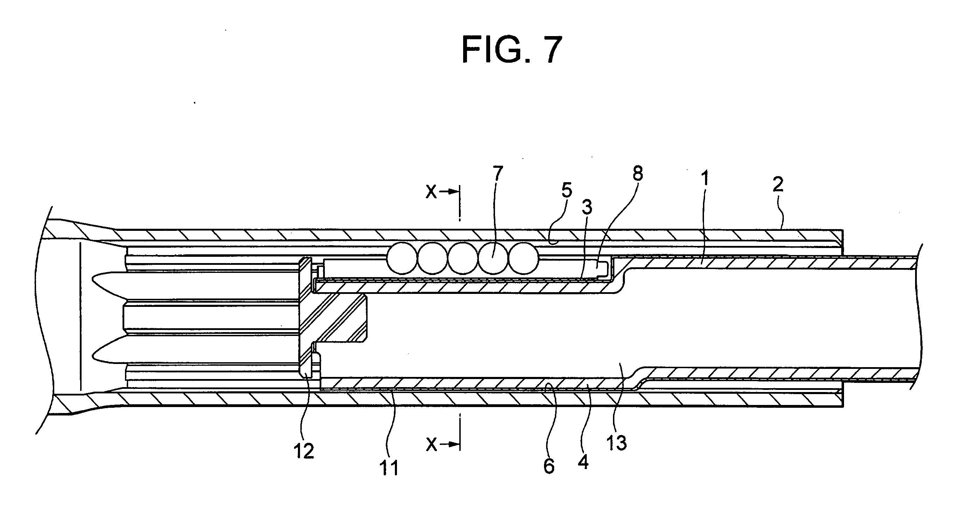

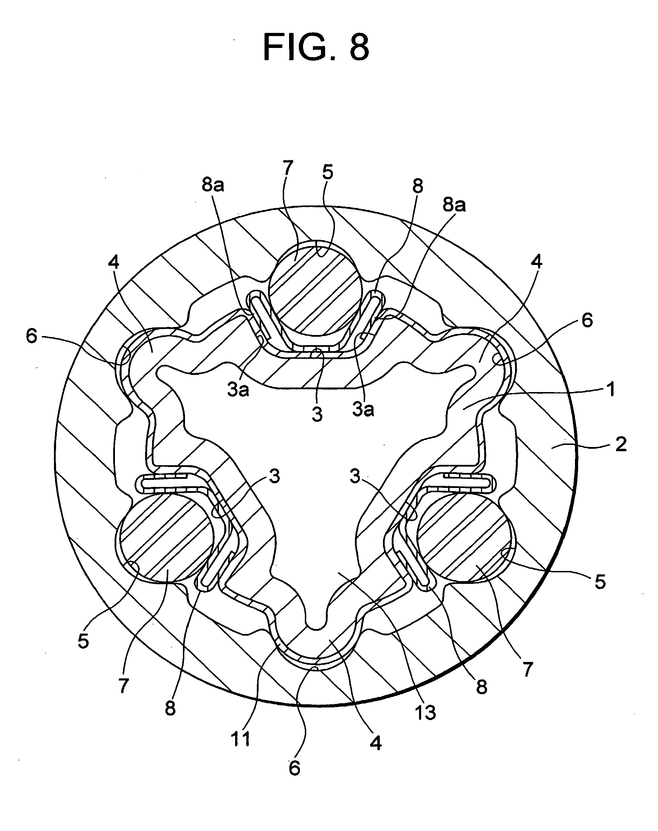

Fig. 7 is a cross-sectional view of the telescopic shaft for vehicle steering according to a third example, given by way of background to the present invention, taken along the center line in the axial direction thereof, and Fig. 8 is a cross-sectional view taken along the line X-X in Fig. 7. The same arrangements as those in the second example are given the same referential numbers and symbols and the description thereof will be omitted.

The third example is different from the second example in that the male shaft 1 is formed to have a hollow structure (a hollow portion 13) in order to reduce the weight of the entire telescopic shaft for vehicle steering and that, with this hollow structure of the male shaft 1, the stopper plate 12 is inserted in the hollow portion 13 of the male shaft 1 and then caulked. Other arrangements, functions and effects are the same as those in the second example, and the description thereof will be omitted.

Note that in the third example, the solid lubricant film 11 is formed along the entire outer peripheral surface of the male shaft 1. However, the solid lubricant film 11 may be provided only on the outer peripheral surfaces of the three axial protrusions 4 which are formed on the male shaft 1. Note that, the same function and effect can be obtained if the solid lubricant film 11 is formed on the inner peripheral surface side of the female shaft 2.

Also, a curvature of the axial protrusion 4 may be different from that of the axial groove 6, and the axial protrusions 4 and the axial grooves 6 may be respectively formed in such a manner that they are brought into contact continuously in the axial direction when they are brought into contact. Also, the same function and effect as those in the present example can be obtained even if the axial protrusions 4 formed on the male shaft are formed on the female shaft side and the axial grooves 6 formed on the female shaft are formed on the male shaft side. It is also possible to arrange such that a curvature of the axial groove 5 is different from that of the rolling members 7 so that the both members can be brought into point contact. Also, the rolling members 7 may take a spherical form. Further, the elastic member 8 may be a leaf spring. It is also possible to obtain a lower sliding load by applying grease on a sliding surface and a rolling surface.

### (Fourth Example)

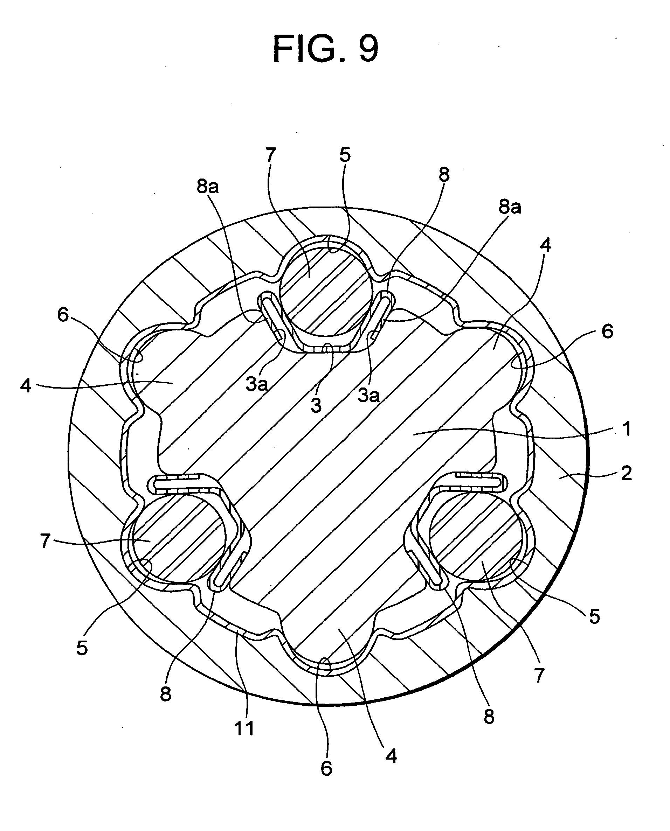

Fig. 9 is a transversal cross-sectional view of the telescopic shaft for vehicle steering according to a fourth example, given by way of background to the present invention. The same arrangements as those in the first example are given the same referential numbers and symbols and the description thereof will be omitted.

The fourth example is different from the first example in that the solid lubricant film 11 is formed on the inner peripheral surface of the female shaft 2. Since it is possible to lower a contact resistance between the axial protrusion 4 and the axial groove 6 of the torque transmitting portion by thus forming the solid lubricant film 11 on the inner peripheral surface of the female shaft 2, the total sliding load (which is a sliding load generated in a normal use in the structure of the present example in which both rolling and sliding are in action) can be lower, compared with the case of the first example.

Then, also in the fourth example, the same function and effect as those in the first example can be obtained.

The solid lubricant film 11 is obtained, for example, by a process in which powder of molybdenum dioxide is dispersed and mixed in resin and a spraying or dipping method is applied and then a baking method is applied, or by a method PTFE (poly-tetrafluoro-ethylene) is dispersed and mixed in resin and a spraying or dipping method is applied and then a baking method is applied.

Note that, in the fourth example, the solid lubricant film 11 is formed along the entire inner peripheral surface of the female shaft 2. However, the solid lubricant film 11 may be provided only on the inner peripheral surfaces of the three axial grooves 6 which are formed on the female shaft 2. This is because the sliding load is mainly caused by the contact between the axial protrusions 4 and the axial grooves 6 so that the sliding resistance in the axial direction can be reduced by reducing the contact resistance of the contact portions therebetween.

It is also possible to obtain a further lower sliding load by applying grease on the sliding surface and the rolling surface. Also, the curvature of the axial protrusion 4 may be different from that of the axial groove 6 so that the axial protrusions 4 and the axial grooves 6 may be formed in such a manner that they are brought into contact with each other continuously in the axial direction. The same function and effect as those in the this example can be obtained even if the axial protrusions 4 formed on the male shaft are formed on the female shaft side and the axial grooves 6 formed on the female shaft are formed on the male shaft side. It is also possible to arrange such that a curvature of the axial groove 5 is different from that of the rolling members 7 so that the both members can be brought into point contact. Also, the rolling members 7 may take a spherical form. Further, the elastic member 8 may be a leaf spring.

### (First, second and third Embodiments)

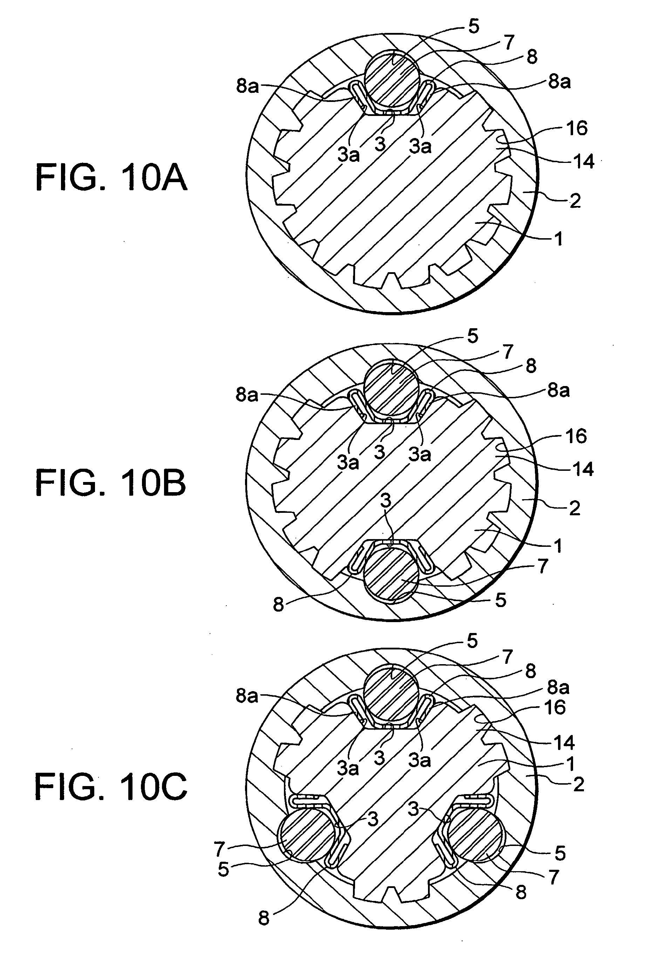

Figs. 10A, 10B and 10C are transversal cross-sectional views of telescopic shafts for vehicle steering according to first, second and third embodiments of the present invention, respectively. The same arrangements as those in the first example of Fig. 3 are given the same referential numbers and symbols and the description thereof will be omitted.

### First Embodiment

In a first embodiment shown in Fig. 10A, on the telescopic shaft for vehicle steering consisting of the male shaft 1 and the female shaft 2 brought into spline fitting, there is provided a preloading portion similar to that in the first example of Fig. 3 at one position between the male shaft 1 and the female shaft 2.

More specifically, as shown in Fig. 10A, the telescopic shaft for vehicle steering (hereinafter called the telescopic shaft) is comprised of the male shaft 1 and the female shaft 2 which are mutually spline-fitted to be unrotatable and slidable.

In the first embodiment, on the outer peripheral surface of the male shaft 1, there are formed a plurality of protrusions 14 extended in the axial direction for the spline fitting. To be corresponding thereto, a plurality of grooves 16 extended in the axial direction are also formed on the inner peripheral surface of the female shaft 2. The axial protrusions 14 and the axial grooves 16 are brought into spline fitting to constitute a torque transmitting portion.

A first axial groove 3 extended in the axial direction (hereinafter called the axial groove 3) having a substantially U shape is formed at one position on the outer peripheral surface of the male shaft 1, instead of the axial protrusion 14 for spline fitting. To be corresponding thereto, on the inner peripheral surface of the female shaft 2, a second axial groove 5 extended in the axial direction (hereinafter called the axial grooves 5) having a substantially arcuate cross section is formed at a position opposite to the axial groove 3. Rolling members 7 are interposed between the axial groove 3 and the axial groove 5 through a wave-shaped elastic member 8 for preloading. The rolling members 7 are arranged to rotate when the male shaft 1 and the female shaft 2 are relatively moved in the axial direction, and to be restrained by the elastic member 8 to prevent generation of backlash.

The elastic member 8 is in pressure contact with wall portions 3a, 3a on the both sides of the axial groove 3 at flat portions 8a, 8a on the both sides thereof, so as to restrain the whole elastic member 8 not to move in the circumferential direction. Then, the elastic member 8 acts to apply preload onto the rolling members 7 and, at the same time, onto the rolling members 7 and the axial protrusions 14 to the extent to generate no backlash with respect to the female shaft 2. Thus, there is formed the telescopic shaft for vehicle steering according to the first embodiment.

Since the telescopic shaft of the first embodiment has such a structure, the male shaft 1 and the female shaft 2 are always in contact to be slidable at the respective torque transmitting portions by the presence of the preloading portion. As a result, the male shaft 1 and the female shaft 2 are mutually slid when they are relatively moved in the axial direction and the rolling members 7 rotate.

On the telescopic shaft constituted as described above, the axial protrusion 14 and the axial groove 16 serving as the torque transmitting portion are spline-fitted to each other between the male shaft 1 and the female shaft 2 and, at the same time, the rolling members 7 are interposed between the axial groove 3 and the axial groove 5 through the elastic member 8 so that the preload is given to the rolling members 7 and the axial protrusions 14 by the elastic member 8 to the extent to generate no backlash with respect to the female shaft 2.

When no torque is transmitted, it is possible to prevent backlash between the male shaft 1 and the female shaft 2 without fail and, at the same time, to slide the male shaft 1 and the female shaft 2 in the axial direction with a stable sliding load without backlash when the male shaft 1 and the female shaft 2 are to be moved relatively to each other in the axial direction.

When a torque is transmitted, a spline-fitting portion between the axial protrusion 14 and the axial groove 16 of the torque transmitting portion functions to mainly perform the task of torque transmission, and the elastic member 8 is elastically deformed in the preloading portion to restrain the rolling members 7 between the male shaft 1 and the female shaft 2 in the circumferential direction, thereby preventing backlash.

Other functions and effects are the same as those in the first example of Fig 3, and the description thereof will be omitted.

### Second Embodiment

In a second embodiment shown in Fig. 10B, on the telescopic shaft for vehicle steering consisting of the male shaft 1 and the female shaft 2 brought into spline fitted thereon, there are provided preloading portions similar to that in the first embodiment at intervals of 180° between the male shaft 1 and the female shaft 2 in the circumferential direction.
Then, a plurality of torque transmitting portions similar to that in the first embodiment are respectively provided in the preloading portions.

Since there are provided two preloading portions as described above, the sliding load can be further reduced, compared with that in the first embodiment, and, at the same time, the backlash can be prevented.

Other arrangements, functions and effects are the same as those in the first embodiment, and the description thereof will be omitted.

### Third Embodiment

In a third embodiment shown in Fig. 10C, on the telescopic shaft for vehicle steering consisting of the male shaft 1 and the female shaft 2 spline fitted thereon, there are provided preloading portions similar to that in the first embodiment at regular intervals of 120° between the male shaft 1 and the female shaft 2 in the circumferential direction.
Then, a plurality of torque transmitting portions similar to that in the first embodiment are respectively provided in the preloading portions.

Since there are provided three preloading portions in the circumferential direction as described above, the sliding load can be further reduced, compared with that in the first and second embodiments, and, at the same time, the backlash can be prevented. Also, since the preloading portions are provided in the circumferential at an interval of 120°, the eccentricity of the shaft can be reduced so that the uneven presence of the sliding load can be improved. Other arrangements, functions and effects are the same as those in the first and second embodiments, and the description thereof will be omitted.

Note that in the first to third embodiments described above, a further lower sliding load can be obtained by applying grease on the sliding surface and the rolling surface. Also, the same function and effect as those in the first to third embodiments can be obtained even if the axial protrusions 14 formed on the male shaft are formed on the female shaft side and the axial grooves 16 formed on the female shaft are formed on the male shaft side. It is also possible to arrange such that a curvature of the axial groove 5 is different from that of the rolling members 7 so that the both members can be in point contact. Also, the rolling members 7 may take a spherical form. Further, the elastic member 8 may be a leaf spring.

### (Fourth, Fifth and Sixth Embodiments)

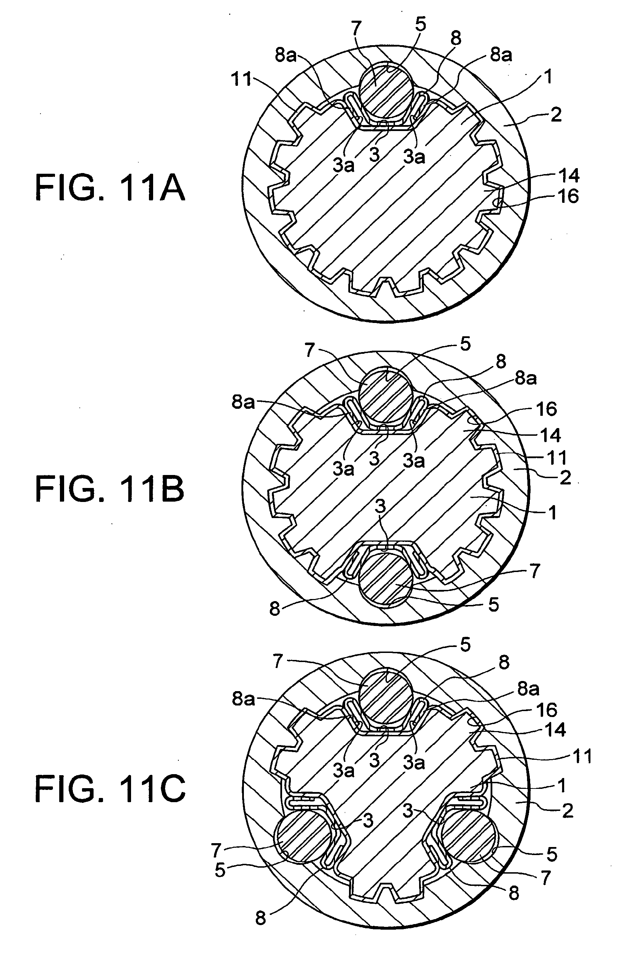

Figs. 11A, 11B and 11C are transversal cross-sectional views of telescopic shafts for vehicle steering according to fourth, fifth and sixth embodiments of the present invention, respectively. The same arrangements as those in the first to third embodiments are given the same referential numbers and symbols and the description thereof will be omitted.

The fourth, fifth and sixth embodiments are different from the first, second and third embodiments in that the solid lubricant film 11 is formed on the outer peripheral surface of the male shaft 1. Since it is possible to lower a contact resistance between the axial protrusion 14 and the axial groove 16 of the torque transmitting portion by thus forming the solid lubricant film 11 on the outer peripheral surface of the male shaft 1, the total sliding load (which is a sliding load generated in a normal use in the structure of embodiments of the present invention in which both rolling and sliding are in action) can be lower than that of the first, second and third embodiments. Then, also in the fourth, fifth and sixth embodiments, the same function and effect as those in the first, second and third embodiments can be obtained.

The solid lubricant film 11 is obtained, for example, by a process in which powder of molybdenum dioxide is dispersed and mixed in resin and a spraying or dipping method is applied and then a baking method is applied, or by a process in which PTFE (poly-tetrafluoro-ethylene) is dispersed or mixed in resin and a spraying or dipping method is applied, and then a baking method is applied.

Note that, a further lower sliding load can be obtained by applying grease on the sliding surface and the rolling surface. Also, the same function and effect as those in the fourth, fifth and sixth embodiments can be obtained even if the axial protrusions 14 formed on the male shaft are formed on the female shaft side and the axial grooves 16 formed on the female shaft are formed on the male shaft side. It is also possible to arrange such that a curvature of the axial groove 5 is different from that of the rolling member 7 so that the both members can be brought into point contact. Also, the rolling members 7 may take a spherical form. Further, the elastic member 8 may be a leaf spring.

### (Seventh, eight and ninth Embodiments)

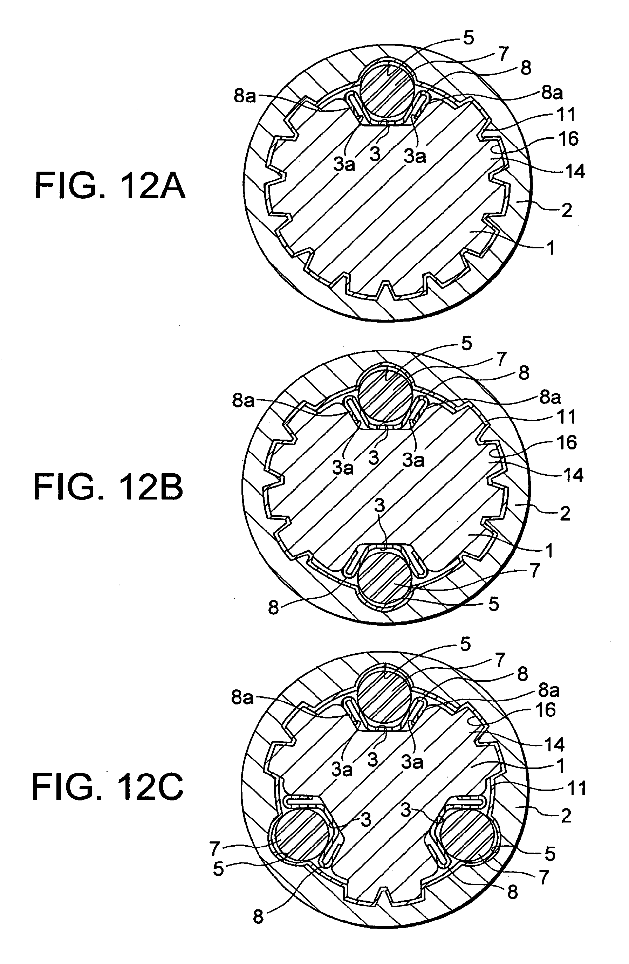

Figs. 12A, 12B and 12C are transversal cross-sectional views of telescopic shafts for vehicle steering according to seventh, eighth and ninth embodiments of the present invention, respectively. The same arrangements as those in the first to sixth embodiments are given the same referential numbers and symbols and the description thereof will be omitted.

The seventh, eighth and ninth embodiments are different from the first, second and third embodiments in that a solid lubricant film 11 is formed on the inner peripheral surface of the female shaft 2. Since it is possible to lower a contact resistance between the axial protrusion 14 and the axial groove 16 of the torque transmitting portion by thus forming the solid lubricant film 11 on the inner peripheral surface of the female shaft 2, the total sliding load (which is a sliding load generated in a normal use in the structure of the present invention in which both rolling and sliding are in action) can be lower than that of the first, second and third embodiments. Then, also in the seventh, eighth and ninth embodiments, the same function and effect as those in the first, second and third embodiments can be obtained.

The solid lubricant film 11 is obtained, for example, by a process in which powder of molybdenum dioxide is dispersed and mixed in resin and a spraying or dipping method is applied and then a baking method is applied, or PTFE (poly-tetrafluoro-ethylene) is dispersed and mixed in resin and a spraying or dipping method is applied, and then a baking method is applied.

Note that, a further lower sliding load can be obtained by applying grease on the sliding surface and the rolling surface. Also, the same function and effect as those in the seventh, eighth and ninth embodiments can be obtained even if the axial protrusions 14 formed on the male shaft are formed on the female shaft side and the axial grooves 16 formed on the female shaft are formed on the male shaft side. It is also possible to arrange such that a curvature of the axial groove 5 is different from that of the rolling members 7 so that the both members can be brought into point contact. Also, the rolling members 7 may take a spherical form. Further, the elastic member 8 may be a leaf spring.

Note that, in the foregoing first to ninth embodiments, description is made on the case that the axial protrusions and the axial grooves are for a spline-fitting. However, even if they are for serration-fitting or simply a meshing fitting, the same function and effect can be obtained.

### (Other Related Items)

In all of the embodiments of the present invention, a hollow male shaft may be used instead of a solid male shaft, and vice versa.

Also, the following description will be applied in all of the embodiments of the present invention.

It may be arranged such that the tip end of the male shaft is caulked inward to prevent the male shaft from being drawn, so as not to be exploded.
The rolling members 7 may be thermally processed and polished. The outer peripheral surface of the male shaft 1 may be coated with resin such as PTFE (poly-tetrafluoro-ethylene)or molybdenum dioxide. A solid or hollow steel member formed by cold drawing may be used as the male shaft 1. An aluminum member formed by cold extrusion may be used as the male shaft 1. A solid steel or aluminum member formed by cold forging may be used as the male shaft 1. A hollow steel member formed by cold drawing may be used as the female shaft 2. It is preferable to subject a material to a metallic soap treatment (bonderization) in order to form the male shaft by cold forging. The female shaft may be formed of a hollow steel tube and may be contracted or expanded after being subjected to a metallic soap treatment (bonderization).
Grooves of the female shaft may be formed by pressing. The female shaft may be subjected to nitrogenation. The inner peripheral surface of the female shaft 2 may be coated with resin such as PTFE (poly-tetrafluoro-ethylene) or molybdenum dioxide.

It is preferable that the following numerical ranges are applied in all of the embodiments of the present invention.
- The diameter of a ball serving as the rolling member is around Φ3 to 6mm when the ball is used in a passenger vehicle. A P.C.D. ratio between the ball diameter, and the ball and the axial protrusion is 1 : 3,5 to 5.0 or around.
- The size of the male shaft is not less than 13 mm when an ordinary carbon steel for a machinery structure is used since a twisting strength which is generally required for a passenger vehicle is not less than 250 Nm.
- The contact pressure of the ball is not higher than 1500 MPa in a state that a torque of 100 Nm is applied thereon. The contact pressure of the axial protrusion is not higher than 2000 Mpa in a state that no torque is applied thereon.
- A ratio between the thickness of the leaf spring serving as the elastic member and the diameter of the ball is 1:10 to 20 or around.

The advantages obtained by embodiments of the present invention compared with the conventional product are:
low cost;
stable lower slide load;
no backlash;
excellent resistance to wear;
excellent heat fastness;
light-weighted;
smaller mechanism; and
capability of coping with every use conditions without changing the designing concept.

Note that a structure in which preload is applied on axial grooves formed on a male shaft and a female shaft by an elastic member through a plurality of balls is disclosed in Japanese Patent Application Laid-Open No. 2001-50293 and German Patent Publication DE No. 3730393 Al. In this respect, embodiments of the present invention are conspicuously superior, as described above, to the case that all rows are in a ball rolling structure, or the case that employs a conventional spline fitting.

Also, European Patent Publication No. EP 1078843 Al discloses a structure of preventing backlash by means of a needle roller, a retainer thereof, or a regulator for preventing backlash. However, since this structure employing a pure slip sliding, the preload can not be set great. As a result, it is very difficult to prevent backlash for a long time or to obtain high rigidity.

On the other hand, embodiments of the present invention can render the following advantageous effects since it partially employs a rolling structure and different means for preventing backlash.
- Since the frictional resistance is low, the sliding load can be reduced.
- The preload can be set high, so that it is possible to prevent backlash for a long time and to obtain high rigidity simultaneously.

Note that the present invention is not limited to the above-described embodiments, but can be changed in various manners.

As described above, according to embodiments of the present invention, it is possible to provide a telescopic shaft for vehicle steering which is capable of surely preventing backlash between the male shaft and the female shaft in the direction of rotation so as to transmit torque in a state of high rigidity.

## Claims

1. A telescopic shaft for vehicle steering in which a male shaft (1) and a female shaft (2) are fitted to each other to be able to transmit torque therebetween and move relative to each other, comprising:
a torque transmitting portion (14,16)provided in an outer peripheral portion of said male shaft (1) and in an inner peripheral portion of said female shaft (2) for transmitting torque;
plural rows of rolling members (7) provided in the circumferential direction and between the outer peripheral portion of said male shaft (1) and the inner peripheral portion of said female shaft (2) at positions different from that of said torque transmitting portion for rolling when said male shaft (1) and said female shaft (2) are relatively moved in the axial direction; and
plural preloading portions each comprising an elastic member (8) provided adjacent a respective one of said plural rows of rolling members (7) for applying preload on said male shaft (1) and said female shaft (2) through said respective one of said plural rows of rolling members (7), being **characterized in that:**
said torque transmitting portion (14,16) comprises spline fitting portions or serration fitting portions (14,16) formed on the outer peripheral surface of said male shaft (1) and on the inner peripheral surface of said female shaft (2);
a plurality of said preloading portions are provided between said male shaft (1) and said female shaft (2);
the telescopic shaft comprises a plurality of said torque transmitting portions (14,16) provided respectively between the adjacent preloading portions; and
the spline or serration fitting portions of said male shaft (1) and said female shaft (2) are respectively so formed that a plurality of spline or serration teeth (14) are present between adjacent ones of said plurality of preloading portions.

2. A telescopic shaft for vehicle steering according to Claim 1, wherein:
said plurality of preloading portions each comprise a first axial groove (3) provided on the outer peripheral surface of said male shaft (1) and a second axial groove (5) provided on the inner peripheral surface of said female shaft (2) to oppose to said first axial groove (3); and
a respective one of said plural rows of rolling members (7) and a respective one of said elastic members (8) are provided between said first and second axial grooves (3,5).

3. A telescopic shaft for vehicle steering according to Claim 1 or 2, wherein said preloading portions are provided at intervals of 120° in the circumferential direction.

4. A telescopic shaft for vehicle steering according to Claim 3, wherein said plurality of torque transmitting portions (14,16) are provided at respective central portions in the circumferential direction between said preloading portions.

5. A telescopic shaft for vehicle steering according to any preceding Claim, wherein each of said rolling members (7) comprise at least one spherical member (7).

6. A telescopic shaft for vehicle steering according to any preceding Claim, wherein said elastic members (8) each comprise a leaf spring (8).

7. A telescopic shaft for vehicle steering according to any preceding Claim, wherein a solid lubricant film (11) is formed in the outer peripheral portion of said male shaft (1) or in the inner peripheral portion of said female shaft (2).

8. A vehicle comprising a telescopic shaft according to any preceding claim.

## Patentansprüche

1. Teleskopische Fahrzeuglenksäule, in welcher eine Innenwelle (1) und eine Außenwelle (2) zusammengefügt sind, um ein Drehmoment dazwischen übertragen und sich relativ zueinander bewegen zu können, umfassend:
einen Drehmomentübertragungsabschnitt (14, 16), der in einem Außenumfangsabschnitt der Innenwelle (1) und in einem Innenumfangsabschnitt der Außenwelle (2) angeordnet ist, um ein Drehmoment zu übertragen;
mehrere Reihen von Wälzkörpern (7), die in der Umfangsrichtung und an anderen Stellen als die des Drehmomentübertragungsabschnitts zwischen dem Außenumfangsabschnitt der Innenwelle (1) und dem Innenumfangsabschnitt der Außenwelle (2) angeordnet sind, um zu rollen, wenn die Innenwelle (1) und die Außenwelle (2) in der Axialrichtung relativ zueinander bewegt werden; und
mehrere Vorspannabschnitte, die alle ein elastisches Element (8) umfassen, das benachbart zu einer jeweiligen dieser mehreren Reihen von Wälzkörpern (7) vorgesehen ist, um durch die jeweilige dieser mehreren Reihen von Wälzkörpern (7) eine Vorspannung auf die Innenwelle (1) und die Außenwelle (2) auszuüben, **dadurch gekennzeichnet, dass:**
der Drehmomentübertragungsabschnitt (14, 16) Keilwellenverbindungs- oder Kerbverzahnungsabschnitte (14, 16) umfasst, die auf der Außenumfangsfläche der Innenwelle (1) und auf der Innenumfangsfläche der Außenwelle (2) geformt sind;
eine Vielzahl dieser Vorspannabschnitte zwischen der Innenwelle (1) und der Außenwelle (2) vorgesehen sind;
die teleskopische Lenksäule eine Vielzahl von Drehmomentübertragungsabschnitten (14, 16) umfasst, die jeweils zwischen den benachbarten Vorspannabschnitten vorgesehen sind; und
die Keilwellenverbindungs- oder Kerbverzahnungsabschnitte der Innenwelle (1) und der Außenwelle (2) jeweils so geformt sind, dass eine Vielzahl von Keilnuten oder Kerbverzahnungen (14) zwischen benachbarten dieser Vielzahl von Vorspannabschnitten vorhanden ist.

2. Teleskopische Fahrzeuglenksäule nach Anspruch 1, wobei:
die Vielzahl von Vorspannabschnitten alle eine erste Axialnut (3) umfassen, die auf der Außenumfangsfläche der Innenwelle (1) vorgesehen ist, und eine zweite Axialnut (5), die auf der Innenumfangsfläche der Außenwelle (2) vorgesehen ist, um der ersten Axialnut (3) gegenüberzuliegen; und
eine jeweilige der mehreren Reihen von Wälzkörpern (7) und ein jeweiliges der elastischen Elemente (8) zwischen den ersten und zweiten Axialnuten (3, 5) vorgesehen sind.

3. Teleskopische Fahrzeuglenksäule nach Anspruch 1 oder 2, wobei die Vorspannabschnitte in Intervallen von 120° in der Umfangsrichtung vorgesehen sind.

4. Teleskopische Fahrzeuglenksäule nach Anspruch 3, wobei die Vielzahl von Drehmomentübertragungsabschnitten (14, 16) zwischen den Vorspannabschnitten an jeweiligen mittleren Abschnitten in der Umfangsrichtung vorgesehen sind.

5. Teleskopische Fahrzeuglenksäule nach einem der vorherigen Ansprüche, wobei jeder der Wälzkörper (7) mindestens ein kugelförmiges Element (7) umfasst.

6. Teleskopische Fahrzeuglenksäule nach einem der vorherigen Ansprüche, wobei die elastischen Elemente (8) alle mindestens eine Blattfeder (8) umfassen.

7. Teleskopische Fahrzeuglenksäule nach einem der vorherigen Ansprüche, wobei im Außenumfangsabschnitt der Innenwelle (1) oder im Innenumfangsabschnitt der Außenwelle (2) ein Feststoffschmierfilm (11) geformt ist.

8. Fahrzeug mit einer teleskopischen Lenksäule nach einem der vorherigen Ansprüche.

## Revendications

1. Arbre télescopique destiné à une direction de véhicule, dans lequel un arbre mâle (1) et un arbre femelle (2) sont ajustés l'un à l'autre pour pouvoir transmettre un couple de torsion entre eux et se déplacer l'un par rapport à l'autre, comprenant :
une partie de transmission de couple (14, 16) aménagée dans une partie périphérique externe dudit arbre mâle (1) et dans une partie périphérique interne dudit arbre femelle (2) pour la transmission du couple ;
de multiples rangées d'éléments roulants (7) aménagées dans la direction circonférentielle et entre la partie périphérique externe dudit arbre mâle (1) et la partie périphérique interne dudit arbre femelle (2) dans des positions différentes de celle de ladite partie de transmission de couple destinés à rouler lorsque ledit arbre mâle (1) et ledit arbre femelle (2) sont déplacés entre eux dans la direction axiale ; et
de multiples parties de pré-chargement, comprenant chacune un élément élastique (8) aménagé adjacent à une rangée respective desdites multiples rangées d'éléments de roulement (7) destinés à appliquer d'une pré-charge sur ledit arbre mâle (1) et ledit arbre femelle (2) par ladite rangée respective desdites multiples rangées d'éléments roulants (7), **caractérisé en que** :
ladite partie de transmission de couple (14, 16) comprend des parties d'ajustement cannelées ou des parties d'ajustement dentelées (14, 16) formées sur la surface périphérique externe dudit arbre mâle (1) et sur la surface périphérique interne dudit arbre femelle (2) ;
une pluralité desdites parties de pré-chargement est aménagée entre ledit arbre mâle (1) et ledit arbre femelle (2) ;
l'arbre télescopique comprend une pluralité desdites parties de transmission de couple (14, 16) aménagées respectivement entre les parties de pré-chargement adjacentes ; et
les parties d'ajustement cannelées ou dentelées dudit arbre mâle (1) et dudit arbre femelle (2) sont respectivement formées de sorte qu'une pluralité de dents cannelées ou de dentelées (14) soit présente entre des parties adjacentes de ladite pluralité de parties de pré-chargement.

2. Arbre télescopique destiné à une direction de véhicule selon la revendication 1, dans lequel :
ladite pluralité de parties de pré-chargement comprend chacune une première rainure axiale (3) ménagée sur la surface périphérique externe dudit arbre mâle (1) et une seconde rainure axiale (5) ménagée sur la surface périphérique interne dudit arbre femelle (2) pour être en regard de ladite première rainure axiale (3) ; et
une rangée respective desdites multiples rangées d'éléments roulants (7) et un élément respectif desdits éléments élastiques (8) sont aménagés entre lesdites première et seconde rainures axiales (3, 5).

3. Arbre télescopique pour conduite de véhicule selon la revendication 1 ou 2, dans lequel lesdites parties de pré-chargement sont aménagées à intervalles de 120 ° dans la direction circonférentielle.

4. Arbre télescopique destiné à une direction de véhicule selon la revendication 3, dans lequel ladite pluralité de parties de transmission de couple (14, 16) est aménagée dans des parties centrales respectives dans la direction circonférentielle entre lesdites parties de pré-chargement.

5. Arbre télescopique destiné à une direction de véhicule selon l'une quelconque des revendications précédentes, dans lequel chacun desdits éléments roulants (7) comprend au moins un élément sphérique (7).

6. Arbre télescopique destiné à une direction de véhicule selon l'une quelconque des revendications précédentes, dans lequel lesdits éléments élastiques (8) comprennent chacun un ressort à lames (8).

7. Arbre télescopique destiné à une direction de véhicule selon l'une quelconque des revendications précédentes, dans lequel un film lubrifiant continu (11) est formé dans la partie périphérique externe dudit arbre mâle (1) o dans la partie périphérique interne dudit arbre femelle (2).

8. Véhicule comprenant un arbre télescopique selon l'une quelconque des revendications précédentes.
